# EUROPEAN PATENT SPECIFICATION

(11) **EP 4 357 864 B1**
(45) Date of publication and mention of the grant of the patent: **05.11.2025**
(21) Application number: 23197051.8
(22) Date of filing: 13.09.2023
(51) Int. Cl.: G05B 19/418

(54) **CONTROL DEVICE AND METHOD FOR DETERMINING A JOINT IDENTITY OF A TIGHTENED JOINT**
STEUERUNGSVORRICHTUNG UND VERFAHREN ZUR BESTIMMUNG EINER GELENKIDENTITÄT EINES GESPANNTEN GELENKS
DISPOSITIF DE COMMANDE ET PROCÉDÉ DE DÉTERMINATION D'UNE IDENTITÉ D'ARTICULATION D'UNE ARTICULATION SERRÉE

(30) Priority: 20.10.2022 SE 2230337
(43) Date of publication of application: 24.04.2024
(73) Proprietor: Atlas Copco Industrial Technique AB, 105 23 Stockholm (SE)
(72) Inventor: Gustafsson, Joakim, 141 32 Huddinge (SE)
(74) Representative: Atlas Copco Industrial Technique AB

(56) References cited:
- EP-B1- 2 470 969
- GB-A- 2 511 591
- US-A1- 2014 331 830
- US-A1- 2015 253 766
- US-B2- 11 270 473

## Description

### Field of the invention

The present invention generally relates to the field of control devices and methods for tightening tools to be used for tightening joints in a production process.

### Background of the invention

In industrial assembly factories, tightening tools are used for tightening joints in objects. The traceability of the performed tightenings is important for auditing purpose. Typically, it is desired to store information about the result of each unique tightening, such as the resulting torque and angle trace (normally referred to as trace data), together with the joint identity as defined in a model/specification for the object (such as in a design drawing, CAD model or the like) and an object identification number (i.e. a unique ID for each object that is produced in the production process).

To determine the joint identity of a certain tightening, positioning of the tool is ideally used. For example, each one of a set of predetermined positions at a work station is associated with a joint identity as defined in the design drawing of the object assembled at the work station.

The position of the tool may e.g. be determined by means of ultra wide band radio (UWB) or other radio based techniques. The position of the tool relative to a so called anchor is determined by analyzing a radio signal transmitted there between, such as by determining the Time of Flight (ToF) of the signal.

A problem with such radio based positioning techniques is that they are relatively expensive. Another problem that may occur when using such positioning techniques is that, at some locations at a work station, the tool may be shadowed from radio contact with the anchor. For example, parts of the object being processed may cause a shadowing effect, such as when joints should be tightened inside a vehicle cab. The metal sheets of the cab may obstruct radio signals from submission there through. Hence, there is a risk that the position of a tool tightening such joints cannot be properly determined, whereby the traceability of the production process becomes less accurate. Further, even if no shadowing effect is present, it is difficult with today's radio based positioning techniques to determine an exact position on a centimeter/millimeter level of accuracy. Hence, joints located close to each other may be difficult to identify.

US 2014331830 A1 shows an electronic torque wrench that instantaneously logs data in real time from a torquing operation and can later transfer the data to an external device, such as a computer, for further analysis. For example, the computer can create a graph that can be analyzed to determine relevant parameters of the torquing profile.

US 2015253766 A1 shows a tool location system for a handheld tool in a manufacturing environment, wherein the tool is equipped with a camera for capturing images. The location system comprises numerical evaluator means, which is built to determine a tool-location of the tool by a simultaneous location and mapping (SLAM) navigation calculation based on the images from the camera.

US 11270473 B2 shows a mechanical fastening unit management method using an augmented reality space generated by superimposing a virtual space on a real space. In the augmented reality space where a real fastening unit and a virtual fastening unit are in a one-to-one correspondence, information that the real fastening unit is selected as a fastening target is acquired with a camera or the like and analyzed by an augmented reality server connected to the camera.

GB 2511591 A shows a system wherein an identification code reading portion is removably attached to each one of operation target components and can read an identification code capable of identifying each of the operation target components.

EP 2470969 B1 shows a method and apparatus used to visually recognize and install fasteners on a structure. An electronic image of the fastener is recorded and then processed by a computer operated image recognition program to identify the fastener.

### Summary of the invention

It would be advantageous to achieve a control device and a method overcoming, or at least alleviating, the above mentioned drawbacks. In particular, it would be desirable to enable a control device and a method that can improve the traceability in a production process.

To better address one or more of these concerns, a control device and a method having the features defined in the independent claims are provided. Preferable embodiments are defined in the dependent claims.

Hence, according to a first aspect, a control device according to claim 1 is provided.

According to a second aspect, a method according to claim 9 is provided.

A production process is normally preceded by a pre-production configuration process, wherein the equipment to be used and processing steps that are to be performed may be tested and configured for the specific assembly to be performed. With the present invention, a user (such as an operator) can in such a pre-production configuration process, for a specific assembly, pre-set a torque/angle curve for the purpose of distinguishing different joint identities later on in the production process. The characteristics of the torque/angle data of a tightening will reflect the characteristics of the joint, e.g. in terms of hardness/softness of the joint. Joints are thus identified by analysis of their torque/angle data. The pre-set curve is utilized as a reference for estimating the identity of the tightened joint. Hence, means further to positioning techniques are provided to aid in determining the joint identity of a tightened joint, which improves the traceability of the production process. For facilitating understanding of the invention and embodiments thereof, some of the terms used in the present specification will now be explained.

In the present specification, the term "object model" may refer to a representation of an object to be assembled in the production process. The object model may specify the elements to be assembled and the joints for joining the elements together. Hence, one object model is used for assembling several equal objects. The object model may typically be a design drawing for the object, but may also be a CAD model, and/or some other kind of product specification.

In the present specification, the term "joint identity" may refer to an identity of a particular joint as defined in an object model. A joint identity may typically be expressed as a number/code (e.g. ABC 123). Typically, each one of the joint identities in one object model may be unique. As an illustrative example, in manufacturing of vehicles, some characters of the joint identity number/code may represent car model, some characters may represent vehicle part (e.g. engine) and some characters being unique on that drawing for the joint in question.

In the present specification, the term "object identification number" may refer to a unique ID for each produced object. Hence, each object/product being assembled may be assigned a unique number/code. As an illustrative example, in manufacturing of vehicles, such object identification number is known as vehicle identification number, VIN.

In the present specification the term, "result identity" may refer to a unique identity for the result of each tightening made during the production process. The result of each tightening may comprise e.g. trace data (resulting torque/angle), the joint identity of the tightened joint and the object identification number for the object on which the tightening was made.

According to an embodiment, allowing a user to pre-set the at least one torque/angle curve in a graph on the display (in step a)) may comprise to control the display to show a graph (to the user) and receive input from a user interface, the input giving an indication of the torque/angle curve that is to be pre-set. Hence, the user may pre-set the curve by entering an indication (representation) of the curve via the user interface. The user may e.g. draw the curve in the graph him-/herself or enter a few single data points in the graph, wherein the control device may compute a curve based on the points, such as by means of interpolation.

According to an embodiment, the pre-set curve may be a torque/angle derivate curve. The control device may then be further configured to:
e) determine a torque/angle derivate based on the received data related to the torque and angle,
wherein step c) comprises comparing the torque/angle derivate determined in step e) with the pre-set curve torque/angle derivate curve.

Thus, characteristics of the torque/angle derivate of the tightening may be utilized in order to determine the joint identity. Typically, the characteristics of the torque/angle derivate may reflect characteristics of the joint (e.g. in terms of hardness/softness).

The torque/angle derivate determined in step e) may be in form of one or more single data points or a complete curve.

According to an embodiment, the pre-set torque/angle derivate curve and the determined torque/angle derivate may be of the first order.

According to an embodiment, the pre-set torque/angle derivate curve and the determined torque/angle derivate may be of the second order.

According to an embodiment, the control device may further be configured to, in the pre-production configuration process, prior to step a):
f) receive data from the tightening tool related to the torque and angle resulting from a test tightening of a first joint having a first joint identity;
g) receive data from the tightening tool related to the torque and angle resulting from a test tightening of a second joint having a second joint identity, different from the first joint identity; and
h) control the display to show the data received in step f) and g), thereby allowing the user to pre-set the at least one torque/angle curve in the graph on the display relative to the data received in step f) and g),
wherein step d) comprises determining if the tightened joint has the first or second joint identity based on the comparison.

Hence, the user may set the pre-set curve as he/she considers appropriate with respect to the curves of the test tightenings.

Different joints in an assembly may typically have different levels of soft-/hardness. This may depend on the properties of the fastener and on the properties of the elements that are joined together by the fastener. The torque/angle curve of a tightening will reflect that level of soft-/hardness of the joint in question. A harder joint will have a steeper torque/angle curve, while a softer will have a more flat curve.

Thus, as an illustrative example, if the user makes test tightenings of two different joints having different levels of soft-/hardness, the torque/angle data from these tightenings will differ. The user may pre-set the torque/angle curve with respect to this data, e.g. such that the torque/angle data from the first joint ends up on one side of the pre-set curve, and the torque/angle data from the second joint ends up on the other side of the pre-set curve. In this way, joints of the first and second joint identities tightened later on in the production process may be distinguished by comparing their tightening data to the pre-set curve.

According to an embodiment, the joint identity may be a joint identity as defined in a design drawing of an object to be processed during the production process. In design drawings for objects to be processed, the joint identity is typically specified for each joint.

According to an embodiment, the control device may be further configured to:
i) save a result of the performed tightening, wherein the result comprises at least the received data related to the torque and angle and the determined joint identity for the tightening.

The saved result may be used later on for auditing purpose. For example, the result may further comprise the object identification number of the assembled object. For example, the result may be labeled with a unique result identity (such as a number/code).

According to an embodiment, the control device may be configured to determine a position of the tightening tool based on analysis of a radio signal transmitted between the tightening tool and an anchor positioned on, or in a predetermined position relative to, the object to be processed.

Radio based positioning techniques implies a risk of shadowing effect, which may reduce the accuracy of the positioning of the tool. With the present embodiment, the negative effects of such shadowing effect are reduced, as joint identity may be determined by other means than by positioning of the tool.

According to an embodiment, a system is provided comprising:
at least one tightening tool to be used for tightening joints in a production process,
a display; and
a control device according to the first aspect (or any one of its embodiments) and being connectable to the tightening tool and the display. According to an embodiment, a computer program is provided comprising instructions which, when the program is executed by a computer, cause the computer to carry out the method as defined in the second aspect.

According to an embodiment, a computer-readable storage medium is provided comprising instructions which, when executed by a computer, cause the computer to carry out the method as defined in the second aspect.

In the present specification the term "joint" is to be widely interpreted to include any type of threaded joint. That is, the joint may include any type of threaded fastener, such as a bolt, nut and/or screw.

Further, in the present specification, the term "control device" is to be widely interpreted as any suitable computational hardware, centralized in a single unit or distributed in several units (such as cloud based).

### Brief description of the drawings

These aspects will now be described in more detail in the following illustrative and non-limiting detailed description of embodiments, with reference to the appended drawings.
Figure 1 shows a system according to an embodiment.
Figure 2 shows a display of the system during a pre-production configuration process according to an embodiment.
Figure 3 shows a display of the system during a production process according to an embodiment.
Figure 4 shows a display of the system according to an embodiment.
Figure 5 shows a method according to an embodiment.

All the figures are schematic, not necessarily to scale, and generally only show parts which are necessary in order to elucidate the embodiments, wherein other parts may be omitted. Like reference numerals refer to like elements throughout the description.

### Detailed description of embodiments

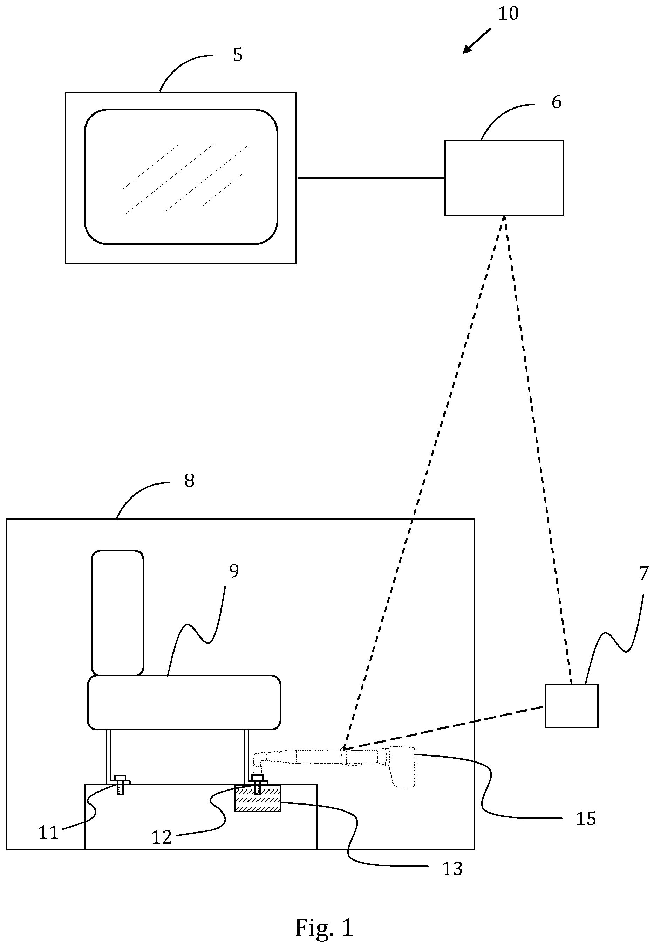

A system 10 according to an embodiment will be described with reference to Figure 1. The system 10 may be situated in an industrial assembly factory for assembling objects/products. The system 10 comprises at least one tightening tool 15 for tightening joints 11, 12 on an object 8, 9 during a production process, such as at a work station in the factory. As an illustrative example, the object may be a seat 9 to be mounted inside a vehicle cab 8, by means of threaded joints 11, 12.

The joints 11, 12 to be tightened during the production process may be specified in an object model, such as a in a design drawing (which alternatively may be referred to as an assembly drawing). The joints 11, 12 are each one associated with a joint identity that is specified in the object model. As an illustrative example, a first one 11 of the joints may have a joint identity code: ABC 001, wherein "A" stands for the vehicle model, "B" stands for the vehicle part at a high hierarchy level, namely the cab, "C" stands for the vehicle part at a lower hierarchy level, namely the seat, and "001" is a unique number of that joint in the design drawing. Analogously, a second one 12 of the joints may have a joint identity code: ABC 002.

The system 10 further comprises a control device 6, to which the tool 15 is connected (by wire or wirelessly). The control device 6 may e.g. be a computer. The system 10 further comprises a display 5 connected to the control device 6. The control device 6 may comprise a processor and a memory comprising program code to be executed by the processor. It will be appreciated that the control device 6 may be comprised in a single unit or may be distributed in several units, such as being cloud based. The control device 6 may be separate from, or built into the tool 15.

The system 10 may (optionally) further comprise at least one anchor 7 arranged to communicate a radio signal with the tightening tool 15 for the purpose of determining a position of the tool 15 relative to the object 9. The anchor 7 may be arranged on, or at a known position relative to, the object 9. The radio signal may be analyzed (e.g. by the anchor 7 itself and/or the control device 6), such as by determining the time of flight (ToF) of the signal in order to determine the position of the tool 15. The determined position of the tool may be used as a basis for determining the joint identity of the joints 11, 12. For example, predetermined positions at the work station are associated with the joint identities according to the object model. However, due to shadowing issues, or for joints located very close to each other, it may not always be possible to determine the joint identity based on the position of the tool 15.

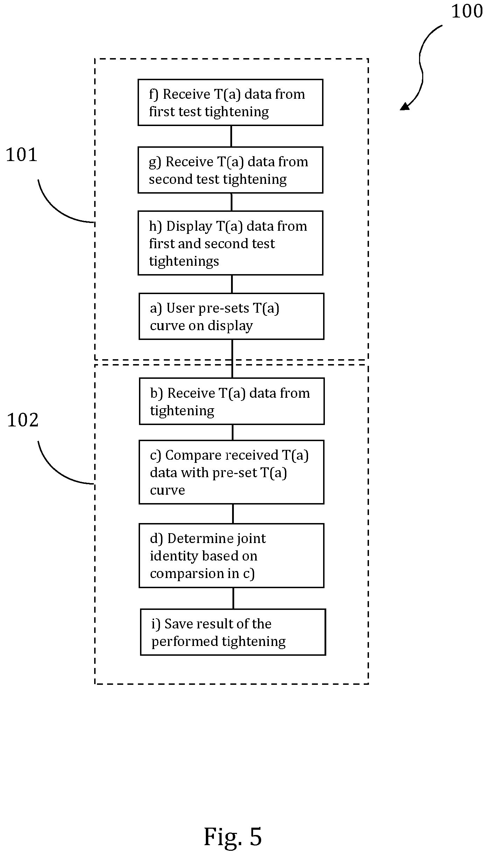

In a pre-production configuration process, a user (such as an operator) may set up the control device 6 and the tightening tool 15 for the specific assembly of the object 8, 9 to be performed at the work station. This may e.g. include selecting appropriate tightening programs to be used for each joint. According to an embodiment, the user may in such a pre-production configuration process (indicated by reference 101 in method chart 100 in Figure 5) make test tightenings of the joints 11, 12 included in the assembly. For example, the control device 6 may receive torque and angle data (T(a)) from a first test tightening of the first joint 11 and from a second test tightening of the second joint 12 (as shown in step f) and g) in Figure 5).

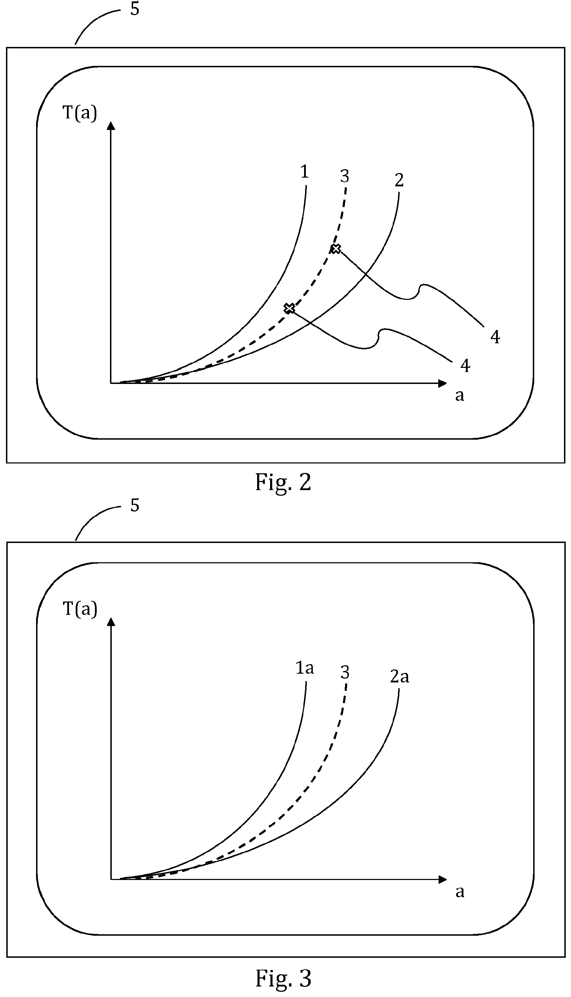

Figure 2 illustrates the display 5, wherein the torque/angle data of the first and second test tightenings are displayed as curves 1 and 2, respectively, in the graph (see also step h) in Figure 5). As can be seen, the curves 1, 2 have different characters, which may be a consequence of the joints 11, 12 having different levels of hardness/softness. The second joint 12 may e.g. be provided in a softer material 13 as compared to the first joint 11 (see Figure 1). As a result, the torque/angle curve 2 of the second joint 12 will be slightly flatter (less steep) as compared to the curve 1 of the first joint 11.

Now the user is allowed to pre-set a torque/angle curve 3 in the graph on the display 5 (see step a) in Figure 5) relative to the curves 1, 2 of the test tightenings. The user may do so by means of a user interface, such as a keyboard, mouse or a touch screen (which e.g. may be comprised in the display 5). For example, the user may indicate one or more data points 4 in the graph, wherein the control device 6 may compute the curve 3 based in these data points. Alternatively (or as a complement), the user may draw a part of, or the complete, curve 3 him-/herself directly in the graph.

As an alternative to making test tightenings of the first and second joints 11, 12, for providing the curves 1, 2, the user may pre-set the curve 3 relative to some other kind of reference, such as predetermined data points.

According to an embodiment, the user may configure the control device 6 such that the torque/angle data in upcoming tightenings in the production process being related to the pre-set curve 3 in a particular way, such as ending up mainly on the left side of the pre-set curve 3, will be associated with the first joint identity, while the torque/angle data in upcoming tightenings in the production process being related to the pre-set curve 3 in another particular way, such as ending up mainly on the right side of the pre-set curve 3, will be associated with the second joint identity.

For the sake of simplicity, test tightenings of only two joints 11, 12 and presetting of only one curve 3 is illustrated in the present example. However, it will be appreciated that test tightenings of more joints could be done, and optionally also several different pre-set curves can be made (such as in relation to the curves of the test tightenings).

When the pre-production configuration process has been completed, the actual production process can start. The production process is indicated by reference number 102 in the method chart 100 in Figure 5. Now a user (it may not necessarily be the same user as the one involved in the pre-production configuration process) will assemble the object 8, 9 by tightening joints 11, 12 as specified in the object model (design drawing). As the set up with the joints 11, 12 and object 8, 9 will look essentially the same in the actual production process as in the pre-production configuration process, the same figure references (Figure 1) will be used as those used for describing the pre-production configuration process.

The control device 6 may receive (from the tool 15) the torque/angle data T(a) of the tightening of the first joint 11 (see step b) in Figure 5). The torque/angle curve 1a (illustrated in Figure 3) of the first joint 11 may look essentially like curve 1 of the test tightening as the fastener as well as the elements joined by the fastener will be essentially identical to those involved in the pre-production configuration process. The control device 6, may then compare the received torque/angle data T(a) 1a with the pre-set curve 3 (step c) in Figure 5), and then, based on the comparison, determine the joint identity of the tightened joint 11 (step d) in Figure 5), which in the present case is the first joint identity, ABC 001. The same is done when the second joint 12 is tightened (see curve 2a in Figure 3), wherein the control device 6 may determine that the joint identity of the second joint 12 is the second joint identity, ABC 002.

According to an embodiment, the control device 6 may save the joint identity determined for a particular tightening in a result data sheet/block along with the torque/angle data of the tightening and preferably also the object identification number of the assembled object, such as the vehicle identification number, VIN (step i) in Figure 5). The result data sheet may be labeled with a unique result identity code for that tightening. The result data sheet may be communicated further to a manufacturing management system, which may keep track of it for future auditing.

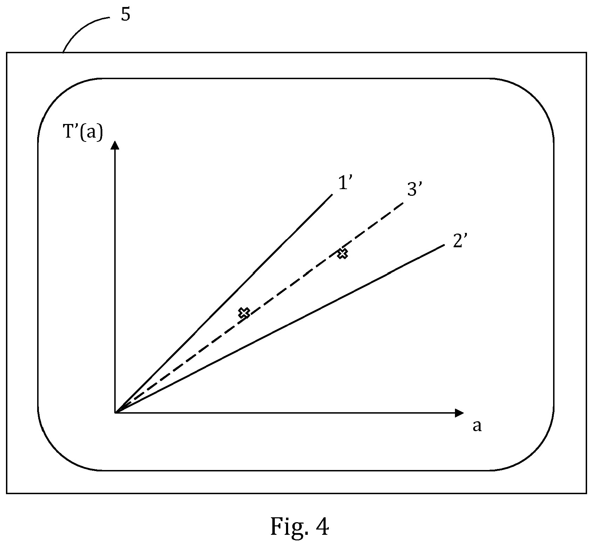

According to an embodiment, the torque/angle data 1', 2' of the test tightenings, the tightenings in the production process, as well as the pre-set curve 3' may be in the form of torque/angle derivate of the first and/or second order, as illustrated in Figure 4.

The person skilled in the art realizes that the present invention by no means is limited to the embodiments described above. On the contrary, many modifications and variations are possible within the scope of the appended claims.

## Claims

1. Control device (6) arranged to be connected to a display (5) and at least one tightening tool (15) to be used for tightening joints (11, 12) in a production process, the control device being configured to:
a) in a pre-production configuration process, allow a user to pre-set at least one torque/angle curve (3) in a graph on the display for distinguishing different joint identities later on in the production process;
b) then, in the production process, receive data (1a, 2a) from the tightening tool, the data being related to the torque and angle resulting from a tightening of a joint;
c) comparing the received data related to the torque and angle with the pre-set torque/angle curve; and
d) determine a joint identity of the tightened joint based on the comparison.

2. The control device as defined in claim 1, wherein the pre-set curve is a torque/angle derivate curve (3'), the control device being further configured to:
e) determine a torque/angle derivate (1', 2') based on the received data related to the torque and angle,
wherein step c) comprises comparing the torque/angle derivate determined in step e) with the pre-set curve torque/angle derivate curve.

3. The control device as defined in claim 2, wherein the pre-set torque/angle derivate curve and the determined torque/angle derivate are of the first order.

4. The control device as defined in claim 2 or 3, wherein the pre-set torque/angle derivate curve and the determined torque/angle derivate are of the second order.

5. The control device as defined in any one of the preceding claims, further configured to, in the pre-production configuration process, prior to step a):
f) receive data from the tightening tool related to the torque and angle resulting from a test tightening of a first joint (11) having a first joint identity;
g) receive data from the tightening tool related to the torque and angle resulting from a test tightening of a second joint (12) having a second joint identity, different from the first joint identity; and
h) control the display to show the data (1, 2) received in step f) and g), thereby allowing the user to pre-set the at least one torque/angle curve (3) in the graph on the display relative to the data received in step f) and g),
wherein step d) comprises determining if the tightened joint has the first or second joint identity based on the comparison.

6. The control device as defined in any one of the preceding claims, wherein the joint identity is a joint identity as defined in a design drawing of an object (8, 9) to be processed during the production process.

7. The control device as defined in any one of the preceding claims, further configured to:
i) save a result of the performed tightening, wherein the result comprises at least the received data related to the torque and angle and the determined joint identity for the tightening.

8. System (10) comprising:
at least one tightening tool (15) to be used for tightening joints (11, 12) in a production process,
a display (5); and
a control device (6) according to any one of the preceding claims and being connectable to the tightening tool and the display.

9. Method (100) comprising:
a) in a pre-production configuration process (101), allowing a user to pre-set at least one torque/angle curve in a graph on a display for distinguishing different joint identities later on in the production process;
b) then, in a production process (102), receiving data from a tightening tool, the data being related to the torque and angle resulting from a tightening of a joint;
c) comparing the received data related to the torque and angle with the pre-set torque/angle curve; and
d) determine a joint identity of the tightened joint based on the comparison.

10. Computer program comprising instructions which, when the program is executed by a computer, cause the computer to carry out the method as defined in claim 9.

11. Computer-readable storage medium comprising instructions which, when executed by a computer, cause the computer to carry out the method as defined in 9.

## Patentansprüche

1. Steuervorrichtung (6), die angeordnet ist, um mit einer Anzeige (5) und mindestens einem Anziehwerkzeug (15), das zum Anziehen von Verbindungsstücken (11, 12) in einem Produktionsprozess verwendet wird, verbunden zu werden, wobei die Steuervorrichtung konfiguriert ist zum:
a) in einem Vorproduktionskonfigurationsprozess, Ermöglichen eines Benutzers, in einem Diagramm auf der Anzeige mindestens eine Drehmoment-/Winkelkurve (3) voreinzustellen, zum später in dem Produktionsprozess Unterscheiden verschiedener Verbindungsstück-Identitäten;
b) dann, in dem Produktionsprozess, Empfangen von Daten (1a, 2a) von dem Anziehwerkzeug, wobei sich die Daten auf das Drehmoment und den Winkel, die sich aus einem Anziehen eines Verbindungsstücks ergeben, beziehen;
c) Vergleichen der empfangenen Daten, die sich auf das Drehmoment und den Winkel beziehen, mit der voreingestellten Drehmoment-/Winkelkurve; und
d) Bestimmen einer Verbindungsstück-Identität des angezogenen Verbindungsstücks basierend auf dem Vergleich.

2. Steuervorrichtung nach Anspruch 1, wobei die voreingestellte Kurve eine Drehmoment-/Winkelableitungskurve (3') ist, wobei die Steuervorrichtung ferner konfiguriert ist zum:
e) Bestimmen einer Drehmoment-/Winkelableitung (1', 2') basierend auf den empfangenen Daten, die sich auf das Drehmoment und den Winkel beziehen,
wobei Schritt c) das Vergleichen der Drehmoment-/Winkelableitung, die in Schritt e) bestimmt wird, mit der voreingestellten Drehmoment-/Winkelableitungskurve umfasst.

3. Steuervorrichtung nach Anspruch 2, wobei die voreingestellte Drehmoment-/Winkelableitungskurve und die bestimmte Drehmoment-/Winkelableitung von der ersten Ordnung sind.

4. Steuervorrichtung nach Anspruch 2 oder 3, wobei die voreingestellte Drehmoment-/Winkelableitungskurve und die bestimmte Drehmoment-/Winkelableitung von der zweiten Ordnung sind.

5. Steuervorrichtung nach einem der vorstehenden Ansprüche, die, in dem Vorproduktionskonfigurationsprozess, vor Schritt a) konfiguriert ist zum:
f) Empfangen von Daten von dem Anziehwerkzeug, die sich auf das Drehmoment und den Winkel beziehen, die sich aus einem Testanziehen eines ersten Verbindungsstücks (11), das eine erste Verbindungsstück-Identität aufweist, ergeben;
g) Empfangen von Daten von dem Anziehwerkzeug, die sich auf das Drehmoment und den Winkel beziehen, die sich aus einem Testanziehen eines zweiten Verbindungsstücks (12), das eine zweite Verbindungsstück-Identität aufweist, die von der ersten Verbindungsstück-Identität verschieden ist, ergeben; und
h) Steuern der Anzeige, um die Daten (1, 2), die in Schritt f) und g) empfangen werden, zu zeigen, wobei dadurch dem Benutzer ermöglicht wird, die mindestens eine Drehmoment-/Winkelkurve (3) in dem Diagramm auf der Anzeige relativ zu den Daten, die in Schritt f) und g) empfangen werden, voreinstellen,
wobei Schritt d) das Bestimmen umfasst, ob das angezogene Verbindungsstück basierend auf dem Vergleich die erste oder die zweite Verbindungsstück-Identität aufweist.

6. Steuervorrichtung nach einem der vorstehenden Ansprüche, wobei die Verbindungsstück-Identität eine Verbindungsstück-Identität ist, wie sie in einer Konstruktionszeichnung eines Objekts (8, 9), die während des Produktionsprozesses zu verarbeiten ist, definiert ist.

7. Steuervorrichtung nach einem der vorstehenden Ansprüche, die ferner konfiguriert ist zum:
i) Speichern eines Ergebnisses des durchgeführten Anziehens, wobei das Ergebnis mindestens die empfangenen Daten, die sich auf das Drehmoment und den Winkel beziehen, und die bestimmte Verbindungsstück-Identität für das Anziehen umfasst.

8. System (10) umfassend:
mindestens ein Anziehwerkzeug (15), das zum Anziehen von Verbindungsstücken (11, 12) in einem Produktionsprozess verwendet wird,
eine Anzeige (5); und
eine Steuervorrichtung (6) nach einem der vorstehenden Ansprüche und die mit dem Anziehwerkzeug und der Anzeige verbindbar ist.

9. Verfahren (100), umfassend:
a) in einem Vorproduktionskonfigurationsprozess (101), Ermöglichen eines Benutzers, in einem Diagramm auf einer Anzeige mindestens eine Drehmoment-/Winkelkurve voreinzustellen, zum später in dem Produktionsprozess Unterscheiden verschiedener Verbindungsstück-Identitäten;
b) dann, in einem Produktionsprozess (102), Empfangen von Daten von einem Anziehwerkzeug, wobei sich die Daten auf das Drehmoment und den Winkel, die sich aus einem Anziehen eines Verbindungsstücks ergeben, beziehen;
c) Vergleichen der empfangenen Daten, die sich auf das Drehmoment und den Winkel beziehen, mit der voreingestellten Drehmoment-/Winkelkurve; und
d) Bestimmen einer Verbindungsstück-Identität des angezogenen Verbindungsstücks basierend auf dem Vergleich.

10. Computerprogramm, umfassend Anweisungen, die, wenn das Programm durch einen Computer ausgeführt wird, den Computer veranlassen, das Verfahren nach Anspruch 9 umzusetzen.

11. Computerlesbares Speichermedium, umfassend Anweisungen, die wenn sie durch einen Computer ausgeführt werden, den Computer veranlassen, das Verfahren nach Anspruch 9 umzusetzen.

## Revendications

1. Dispositif de commande (6) conçu pour être connecté à un écran (5) et à au moins un outil de serrage (15) à utiliser pour serrer des joints (11, 12) dans un processus de production, le dispositif de commande étant configuré pour :
a) dans le cadre d'un processus de configuration préalable à la production, permettre à l'utilisateur de prédéfinir au moins une courbe couple/angle (3) dans un graphique sur l'écran afin de distinguer différentes identités d'articulation ultérieurement au cours du processus de production ;
b) recevoir ensuite, au cours du processus de production, des données (la, 2a) provenant de l'outil de serrage, ces données étant liées au couple et à l'angle résultant du serrage d'une articulation ;
c) comparer les données reçues relatives au couple et à l'angle avec la courbe couple/angle prédéfinie ; et
d) déterminer l'identité du joint serré sur la base de la comparaison.

2. Dispositif de commande tel que défini dans la revendication 1, dans lequel la courbe prédéfinie est une courbe dérivée couple/angle (3'), le dispositif de commande étant en outre configuré pour :
e) déterminer un dérivé couple/angle (1', 2') sur la base des données reçues relatives au couple et à l'angle,
dans lequel l'étape c) comprend la comparaison du dérivé couple/angle déterminé à l'étape e) avec la courbe dérivée couple/angle prédéfinie.

3. Dispositif de commande tel que défini dans la revendication 2, dans lequel la courbe dérivée couple/angle prédéfinie et la dérivée couple/angle déterminée sont du premier ordre.

4. Dispositif de commande tel que défini dans la revendication 2 ou 3, dans lequel la courbe dérivée couple/angle prédéfinie et la dérivée couple/angle déterminée sont du second ordre.

5. Dispositif de commande tel que défini dans l'une quelconque des revendications précédentes, configuré en outre pour, dans le processus de configuration préalable à la production, avant l'étape a) :
f) recevoir de l'outil de serrage des données relatives au couple et à l'angle résultant d'un essai de serrage d'une première articulation (11) ayant une première identité d'articulation ;
g) recevoir de l'outil de serrage des données relatives au couple et à l'angle résultant d'un essai de serrage d'un second joint (12) ayant une seconde identité de joint, différente de la première identité de joint ; et
h) commander l'affichage pour montrer les données (1, 2) reçues aux étapes f) et g), permettant ainsi à l'utilisateur de prédéfinir au moins une courbe couple/angle (3) dans le graphique sur l'affichage par rapport aux données reçues aux étapes f) et g),
dans lequel l'étape d) consiste à déterminer si l'articulation serrée possède la première ou la seconde identité d'articulation sur la base de la comparaison.

6. Dispositif de commande tel que défini dans l'une quelconque des revendications précédentes, dans lequel l'identité de l'articulation est une identité d'articulation telle que définie dans un dessin de conception d'un objet (8, 9) à traiter au cours du processus de production.

7. Dispositif de commande tel que défini dans l'une quelconque des revendications précédentes, configuré en outre pour :
i) enregistrer un résultat du serrage effectué, dans lequel le résultat comprend au moins les données reçues relatives au couple et à l'angle et l'identité de l'articulation déterminée pour le serrage.

8. Système (10) comprenant :
au moins un outil de serrage (15) à utiliser pour serrer les joints (11, 12) dans un processus de production,
un écran (5) ; et
un dispositif de commande (6) selon l'une quelconque des revendications précédentes et pouvant être connecté à l'outil de serrage et à l'écran.

9. Procédé (100) comprenant :
a) dans un processus de configuration préalable à la production (101), le fait de permettre à un utilisateur de prédéfinir au moins une courbe couple/angle dans un graphique sur un écran pour distinguer différentes identités d'articulation ultérieurement dans le processus de production ;
b) ensuite, dans un processus de production (102), la réception des données d'un outil de serrage, les données étant liées au couple et à l'angle résultant du serrage d'une articulation ;
c) la comparaison des données reçues relatives au couple et à l'angle avec la courbe couple/angle prédéfinie ; et
d) la détermination de l'identité du joint serré sur la base de la comparaison.

10. Programme informatique comprenant des instructions qui, lorsque le programme est exécuté par un ordinateur, amènent l'ordinateur à mettre en œuvre le procédé défini dans la revendication 9.

11. Support de stockage lisible par ordinateur comprenant des instructions qui, lorsqu'elles sont exécutées par un ordinateur, amènent ce dernier à mettre en œuvre le procédé défini à la revendication 9.
